# EUROPEAN PATENT SPECIFICATION

(11) **EP 3 614 551 B1**
(45) Date of publication and mention of the grant of the patent: **24.05.2023**
(21) Application number: 18787748.5
(22) Date of filing: 22.02.2018
(51) Int. Cl.: H02M 7/48

(54) **POWER CONVERSION DEVICE, DIAGNOSIS SYSTEM FOR SAME, DIAGNOSIS METHOD, AND ELECTRIC MOTOR CONTROL SYSTEM USING SAID DIAGNOSIS METHOD**
ENERGIEUMWANDLUNGSVORRICHTUNG, DIAGNOSESYSTEM DAFÜR, DIAGNOSEVERFAHREN UND ELEKTROMOTORSTEUERUNGSSYSTEM MIT DEM DIAGNOSEVERFAHREN
DISPOSITIF DE CONVERSION DE PUISSANCE, SYSTÈME DE DIAGNOSTIC ASSOCIÉ, PROCÉDÉ DE DIAGNOSTIC, ET SYSTÈME DE COMMANDE DE MOTEUR ÉLECTRIQUE FAISANT APPEL AUDIT PROCÉDÉ DE DIAGNOSTIC

(30) Priority: 21.04.2017 JP 2017084642
(43) Date of publication of application: 26.02.2020
(73) Proprietor: Hitachi, Ltd., Tokyo 100-8280 (JP)
(72) Inventor: KIMURA Yoshinobu, Tokyo 100-8280 (JP); SAKANO Junichi, Tokyo 100-8280 (JP); YASUI Kan, Tokyo 100-8280 (JP); MATSUSHIMA Hiroyuki, Tokyo 100-8280 (JP); FURUTA Futoshi, Tokyo 100-8280 (JP)
(74) Representative: Strehl Schübel-Hopf & Partner
(86) International application number: PCT/JP2018/006521
(87) International publication number: WO 2018/193712

(56) References cited:
- WO-A1-2013/183118
- JP-A- 2013 142 704
- JP-A- 2016 220 481
- JP-A- 2017 070 139
- US-A1- 2009 051 307
- US-A1- 2013 177 041
- ANTONIO E GINART ET AL: "Time delay as a diagnostic technique for power drives", AEROSPACE CONFERENCE, 2009 IEEE, IEEE, PISCATAWAY, NJ, USA, 7 March 2009 (2009-03-07), pages 1-7, XP031450263, ISBN: 978-1-4244-2621-8

## Description

### Technical Field

The present invention relates to a power conversion device, and particularly, relates to maintenance or diagnosis technique of the power conversion device configured by a power semiconductor switching element.

### Background Art

In a power conversion device such as a large-capacity frequency conversion device used for control application of an electric motor for a railway vehicle or a large-sized industry, a power system, and the like, a high voltage and a large current power control is performed using a large-capacity power semiconductor element. In such equipment, when a failure occurs during operation, system damage and an unplanned system shutdown may happen, and a large economic loss may occur. In order to prevent such a situation, it is necessary to detect deterioration or abnormality of the power conversion device, to prevent broken due to a functional stop, notify a related user of necessity of maintenance, and control to prolong a lifetime of the power conversion device.

A failure factor of the power conversion device is overheating of the semiconductor element. When a temperature Tj (also referred to as junction temperature) of a semiconductor chip is equal to or higher than a rated value (for example, 150 °C in a case of Si semiconductor element), the semiconductor chip breaks. For this reason, a heat dissipation design is applied to the power conversion device.

However, materials with a thermal expansion coefficient different from the semiconductor chip are stacked inside the semiconductor element, and aged deterioration of a material such as a solder due to thermal strain during operation cannot be avoided. Therefore, even if the power conversion device is operated in a rated operation, a thermal impedance of the semiconductor element increases with time, and the semiconductor element may be overheated due to poor heat radiation. In addition, due to matters of labor of removing the power semiconductor element from the device and an inspection cost, the power semiconductor element itself is rarely inspected in a normal maintenance work, which is treated in a case where a malfunction or a failure occurs.

For this reason, as a technique for monitoring a state of the power conversion device by a simple method, a technique of measuring the junction temperature during system operation is desired. Although there is a method of incorporating a temperature sensor as an element in a semiconductor module, there are many problems because element processing is costly and a response speed and reliability of the temperature sensor are required. For this reason, there is a technique for estimating the junction temperature by utilizing a thermal circuit model of the semiconductor element and temperature dependency of electrical characteristics.

For example, Patent Literature 1 exemplifies a method of estimating a junction temperature from a temperature dependency of switching characteristics of a semiconductor element. Patent Literature 1 discloses a method for determining the junction temperature of an IGBT (Insulated Gate Bipolar Transistor) element by detecting a start and end stage time delay of a miller plateau phase in a gate-emitter voltage characteristic during a switch-off phase of the IGBT element, and detecting aging when a continuous increase in an average junction temperature is recorded.

### Prior Art Literature

### Patent Literature

PTL 1: JP-A-2013-142704
(also published as US 2013/0177041 A1 which forms the basis for the two-part form of present claims 1 and 7)

### Summary of Invention

### Technical Problem

In Patent Literature 1, it is necessary to provide a dedicated circuit for detecting a waveform change (two-point measurement during switching) in a high-voltage (strong electric) part, and consideration is not given to a point of application to an existing device. In addition, it is necessary to perform long-term data accumulation and analysis for predicting a lifetime of the semiconductor element, and in order to predict the lifetime, data is continuously acquired until aging is recognized, that is, an increase in an average junction temperature is recognized, so that cost is required, and this point is not considered.

Therefore, an object of the invention is to provide a power conversion device, a diagnosis system for same, a diagnosis method, and an electric motor control system using the diagnosis method without providing a temperature sensor in a power conversion device including a plurality of power semiconductor modules and can detect abnormality and damage of the power conversion device with high accuracy by a simple configuration.

### Solution to Problem

In view of the background art and the problem, the present invention provides the subject-matter defined in the claims.

### Advantageous Effect

According to the invention, it is possible to provide the power conversion device, the diagnosis system for same, the diagnosis method, and the electric motor control system using the diagnosis method that can detect abnormality or damage of the power conversion device with high accuracy by a simple configuration.

### Brief Description of Drawings

[FIG. 1] FIG. 1 is an overall block configuration diagram of a diagnosis system of a power conversion device according to a first embodiment.
[FIG. 2] FIG. 2 is a view illustrating a part of a cross-sectional structure of a power semiconductor module in the first embodiment.
[FIG. 3] FIG. 3 is a system block diagram when the diagnosis system according to the first embodiment is applied to a railway.
[FIG. 4] FIG. 4 is a flowchart of junction temperature acquisition in a second embodiment.
[FIG. 5] FIG. 5 is a diagram illustrating a waveform of a gate-emitter voltage and a feedback signal of a switch-on power semiconductor module in the second embodiment.
[FIG. 6] FIG. 6 is a diagram illustrating a waveform of the gate-emitter voltage and a feedback signal of a switch-off power semiconductor module in the second embodiment.
[FIG. 7] FIG. 7 is a diagram illustrating a relationship between a PWM command signal and a feedback signal in a normal state in the second embodiment.
[FIG. 8] FIG. 8 is a diagram illustrating a relationship between the PWM command signal and the feedback signal when a switch failure occurs in the second embodiment.
[FIG. 9] FIG. 9 is a diagram illustrating a delay of the feedback signal in the second embodiment.
[FIG. 10] FIG. 10 is a diagram illustrating temperature dependency of delay time in the second embodiment.
[FIG. 11] FIG. 11 is a diagram illustrating time series data in a third embodiment.
[FIG. 12] FIG. 12 is a diagram illustrating temperature amplitude frequency data obtained by converting time series data of junction temperature into a histogram in the third embodiment.
[FIG. 13] FIG. 13 is a diagram for explaining a GUI in the third embodiment.

### Description of Embodiments

In the embodiment, an overall configuration of a diagnosis system of a power conversion device will be described.

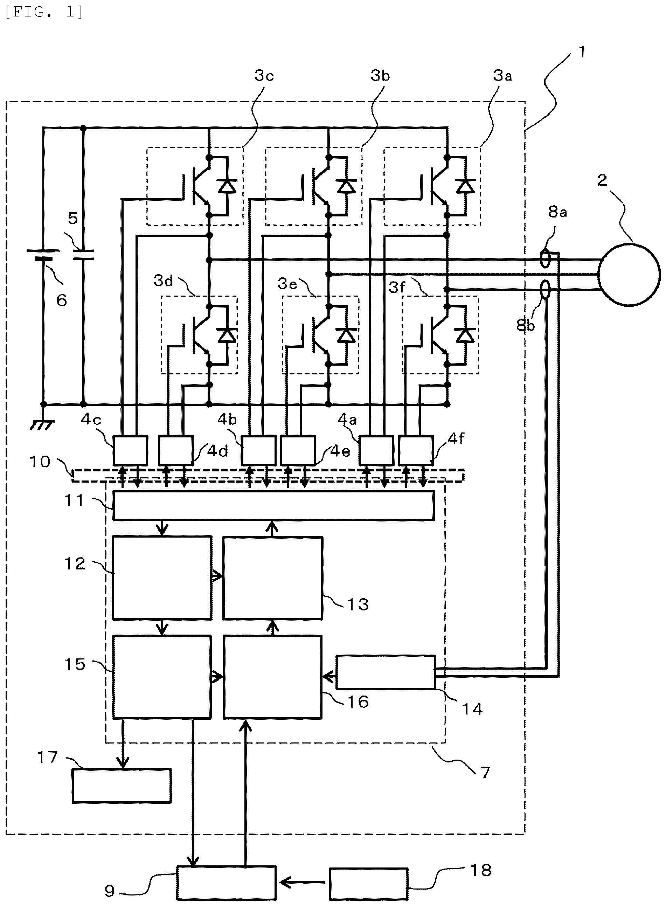

FIG. 1 is a block configuration diagram of an entire system according to the embodiment. In FIG. 1, the system mainly includes a power conversion device 1, a three-phase electric motor 2 driven by the power conversion device 1 as a load, and a Graphical User Interface (GUI) 9 that monitors states of the power conversion device 1 and the electric motor 2. The power conversion device 1 includes a control device 7. Current sensors 8a, 8b for measuring a phase current supplied to the electric motor 2 are provided between the power conversion device 1 and the electric motor 2.

The power conversion device 1 is a device that converts a DC voltage source 6 into a three-phase AC voltage so as to control the electric motor 2. The power conversion device 1 includes a smoothing capacitor 5, a plurality of power semiconductor modules 3a to 3f, gate drive circuits 4a to 4f, and a control device 7. The gate drive circuits 4a to 4f and the control device 7 are insulated by an insulating element 10 (optical coupling type element, magnetic coupling type element, electrostatic coupling type element, and the like) . Although the gate drive circuits 4a to 4f are disposed outside the power semiconductor modules 3a to 3f in FIG. 1, the gate drive circuits 4a to 4f may be incorporated in the power semiconductor modules 3a to 3f.

In the power semiconductor modules 3a to 3f, a transistor, for example, an Insulated Gate Bipolar Transistor (IGBT) and a diode (PN diode, schottky barrier diode, and the like) are connected in anti-parallel. In order to control a large current, a plurality of small capacitance semiconductor chips may be connected in parallel to the power semiconductor modules. The power semiconductor modules 3a to 3f are provided with emitter terminals, collector terminals, and gate terminals. Although the IGBT is used for the power semiconductor modules 3a to 3f in the embodiment, the emitter terminals may be replaced with source terminals and the collector terminals may be replaced with drain terminals in the case of using MOSFET.

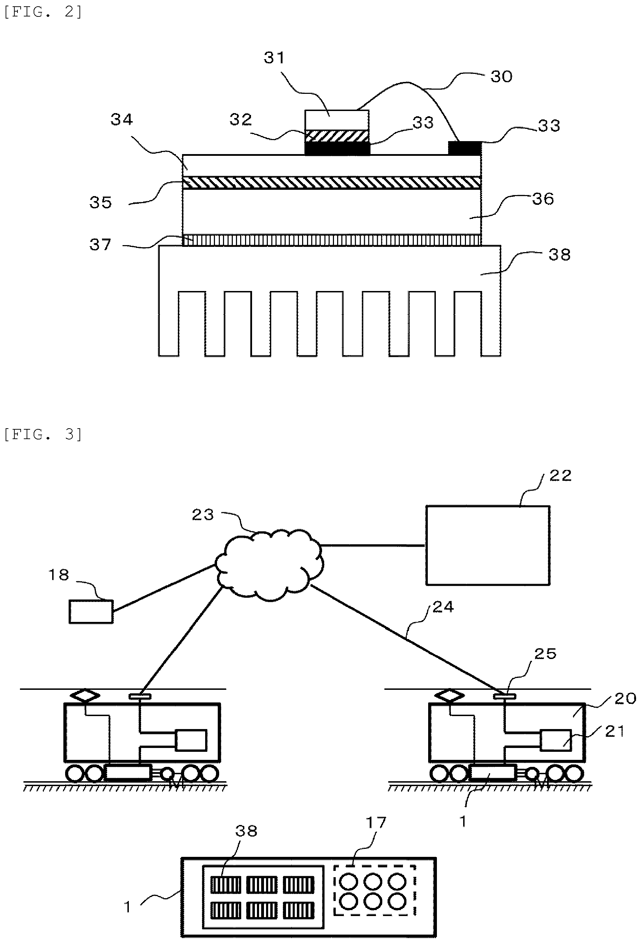

FIG. 2 shows a part of a cross-sectional structure of a power semiconductor module. As shown in FIG. 2, in the power semiconductor module, a semiconductor chip 31 is connected to metal wirings 33 patterned on an insulating substrate 34 by a solder 32 and a bond wire 30. The insulating substrate 34 is connected to a metal base 36 by a solder 35, and a cooler 38 is attached to a back surface of the metal base 36 by using thermal grease 37. The semiconductor chip 31 generates heat during operation, but the cooler 38 and the like are thermally designed therein such that a junction temperature falls within a rated value. However, from a viewpoint of long-term reliability, wear degradation cannot be avoided, and the current imbalance of individual semiconductor chips in the module, and a change of thermal impedance at the solder 32, the solder 35, a contact part between the semiconductor chip 31 of the bond wire 30 occur. Therefore, a difference occurs in a thermal history of each semiconductor chip in the semiconductor module. For example, the junction temperature of one semiconductor chip can be an abnormal temperature. In addition, at least one module of the power semiconductor modules 3a to 3f may has an abnormal temperature.

In FIG. 1, the control device 7 includes a command feedback transmission/reception unit 11, a temperature detection unit 12, a control unit 13, a current detection unit 14, a parameter calculation unit 15, and a logic unit 16.

The command feedback transmission/reception unit 11 sends a pulse width modulation (PWM) command signal from the control unit 13 to the gate drive circuits 4a to 4f. The gate drive circuits 4a to 4f switch the power semiconductor modules 3a to 3f based on the PWM command signal. A switch-on reference voltage and a switch-off reference voltage are set in advance in the gate drive circuits 4a to 4f, and a feedback signal is transmitted to the command feedback transmission/reception unit 11 by comparing the voltage between the gate and the emitter during a switching operation with the preset voltages.

The temperature detection unit 12 calculates a signal delay amount and the junction temperature based on the command signal and the feedback signal, and sends a signal to the control unit 13 and the parameter calculation unit 15.

The parameter calculation unit 15 converts time series data of the junction temperature into a temperature amplitude frequency distribution to be described later, calculates damage degree and remaining lifetime of the power semiconductor modules 3a to 3f, and sends the results to a power conversion device display unit 17. In addition, the results are displayed on a GUI 9 outside the power conversion device.

The user can input, from the GUI 9, an operation command of the power conversion device 1 based on the parameter calculation unit 15 and the environment information acquisition unit 18 (weather data, load data, and the like), and the input data is sent to the logic unit 16.

Based on the data of the GUI 9, the parameter calculation unit 15, weather information (not shown) and load information (not shown), the logic unit 16 sends to the control unit 13 a relaxation driving command of performing a relaxation operation for providing a limit value of the maximum current value when a switching element of the power semiconductor module is conducted. When overheat information is sent from the temperature detection unit 12, the control unit 13 preferentially performs a relaxation control. In addition, a phase current value of the electric motor is sent from the current detection unit 14 to the logic unit 16. The logic unit 16 sends a signal to the control unit 13 based on the temperature information, and instructs the relaxation operation.

The control unit 13 performs relaxation driving by the gate drive circuits 4a to 4f, and performs feedback control based on the result of the current detection unit 14. A relaxation driving result is sent to the GUI 9. The relaxation driving can also be instructed from the GUI 9 by the user. Based on the result of the junction temperature Tj of the semiconductor chip after the relaxation driving, an instruction for cooling system maintenance and semiconductor module replacement is displayed on the GUI 9.

Here, the inventors examine a correlation between the PWM command signal output from the control device 7 of the power conversion device and the feedback signal output from the gate drive circuit when the semiconductor element is switched on or off, and analyzes junction temperature dependency. As a result, it is found that the delay amount of the feedback signal with respect to the switch-off command signal is proportional to the element temperature. The command signal and the feedback signal are acquired on a low voltage (weak electricity) side via an insulating element such as a photo coupler, and an element temperature acquisition unit can be provided with a simple configuration. In addition, it has been found that the junction temperature can be estimated by measuring the delay amount based on switch-on of the command signal and the feedback signal in a single-pulse waveform of switch-on and switch-off.

Further, a point of interest of the inventors is to monitor damage imbalance of individual semiconductor element in the power conversion device. This is because it is extremely rare that a plurality of semiconductor elements fail at the same time, and generally one is broken at first.

The embodiment is based on the finding and the viewpoint described above, and one aspect of the embodiment relates to a diagnosis system of a power conversion device that includes a semiconductor device and performs a switching operation for conducting and blocking a main current flowing through a main circuit. The system includes a temperature detection unit capable of measuring temperature based on delay time of the feedback signal from a switch-off command time of the transistor, an arithmetic processing unit analyzing a state of a semiconductor module based on a temperature detection result and a switch-off command signal, and a user interface unit including a control system that operates in a relaxed manner, a display unit that displays an abnormal module or warns a module lifetime, and a GUI based on a result of the arithmetic processing unit.

As a preferred specific example of the system, the temperature detection unit includes a switch abnormality detection circuit that compares the PWM command signal with the feedback signal, and a temperature measurement circuit based on a delay amount of a feedback signal of the switch-off. In addition, a memory circuit that accumulates time series data of a switch-off command signal and a temperature measurement value is also provided. The arithmetic processing unit includes a circuit that counts the amplitude of the time series data of the temperature accumulated in the buffer unit and converts the amplitude into a temperature amplitude frequency. The user-interface unit includes a display device indicating the damage degree or the remaining lifetime of each semiconductor element based on the temperature amplitude frequency.

In a specific application example of the system, the temperature detection unit is integrated with the power conversion device, or connected by any of wired, wireless, and separable connections by a terminal. Further, the user interface unit is integrated with the temperature detection unit, or is connected by any one of wired, wireless, and separable connections. In the example, since a freedom degree of the configuration is high, for example, it is also possible to diagnose a power conversion device mounted on a train and the like, which will be described later, by a remote monitoring system.

In addition, another aspect of the embodiment is a diagnosis method of the power conversion device that includes a semiconductor switching element and performs a switching operation of conducting and interrupting the main current. The method includes a first step of detecting the switch-off delay time of the feedback signal, a second step of acquiring the junction temperature based on the delay time, and a third step of performing frequency conversion on the temperature amplitude of the element temperature time series data to determine a damage state and remaining lifetime of the semiconductor element.

As a specific configuration, the feedback signal generating circuit incorporated in the gate drive circuit generates a switch-on and a switch-off feedback signal by a comparator set at a suitable switch-on reference voltage and a switch-off reference voltage. The feedback signal generated in the high-voltage system is transferred to the low-voltage system by the photo coupler, and then a switch-off delay amount is acquired. In the actual operating state, since the patterns of the PWM command signals are different according to the load of the power converter, the switch-off delay amount corresponding to the pattern of the PWM command signal is also acquired. A data set of the switch-off delay amount corresponding to the pattern of the PWM command signal is arithmetically processed so as to obtain a junction temperature. The element temperature may be calculated in a case of each switch-off or a case of an average value. The damage state and the remaining lifetime are displayed by converting the time series data of the element temperature into temperature amplitude and frequency. In addition, it is also possible to control the power conversion device based on the diagnosis result. In addition, a damaged and abnormal element can be extracted from the individual power semiconductor module of the power conversion device, and a priority of the element replacement can be determined.

A specific example of an operation condition control includes a relaxation operation of providing a limit value of a maximum current value when a switching element of the power conversion device is conductive, and optimization of generating a suitable PWM command signal from a data set of the PWM command signal and the element temperature. In addition, as a specific example of the switching element, an insulated gate bipolar transistor (IGBT), a metal oxide semiconductor field effect transistor (MOSFET), and the like can be used as the power semiconductor element. Silicon (Si), silicon carbide (SiC), gallium nitride (GaN), and the like can be used as the semiconductor material. In addition, as the switching element, a large-capacity semiconductor module in which small capacitance semiconductor chips are connected in parallel can be used.

FIG. 3 is a system block diagram when the diagnosis system according to the embodiment is applied to a railway. In FIG. 3, 20 is a railway vehicle, 21 is a vehicle information integration system, 22 is a central monitoring device, 23 is an internet, 24 is a wireless path, 25 is an antenna, 1 is a power conversion device, M is an electric motor, and 18 is an environment information acquisition unit.

The power conversion device display unit 17 is installed outside the power conversion device 1 (VVVF inverter, and the like) in the lower part of the railway vehicle 20, so that a maintenance worker can be notified. In addition, since the location of the abnormal semiconductor module can be recognized on the spot, maintenance work efficiency is improved. A warning for prompting cleaning of the cooler 38 in addition to the semiconductor module can also be issued to the power conversion device display unit 17. The GUI 9 may also be included in the vehicle information integration system 21. The vehicle information integration system 21 is a system for monitoring air conditioning, doors, lighting, and the like in the vehicle, and is installed in a seat of a driver. In addition, the information of the GUI 9 can also be transmitted to the central monitoring device 22 via the Internet 23, which is a network in the wireless path 24, by the antenna 25 of the vehicle. In addition, by acquiring other vehicle information through the Internet 23, a more efficient maintenance plan can be formulated. In addition, it is possible to reduce maintenance cost due to efficiency of arrangement of members. In addition, by acquiring weather information and passenger information by the environment information acquisition unit 18, a vehicle can be properly arranged.

As described above, according to the embodiment, it is possible to provide a method for detecting abnormality or damage of the power semiconductor and the power conversion device associated with the power semiconductor with high accuracy by a simple configuration, preventing unfitness such as a failure with high accuracy, and enabling a long-term use. In addition, it is possible to provide a system which acquires the junction temperature and the remaining lifetime of the individual power semiconductor elements in the power converter, gives a feedback of the measurement result to the electric motor control to perform a lifetime extension treatment of the power module, and warns replacement of the parts without processing the power semiconductor element.

### Second Embodiment

In this embodiment, the temperature detection unit will be described.

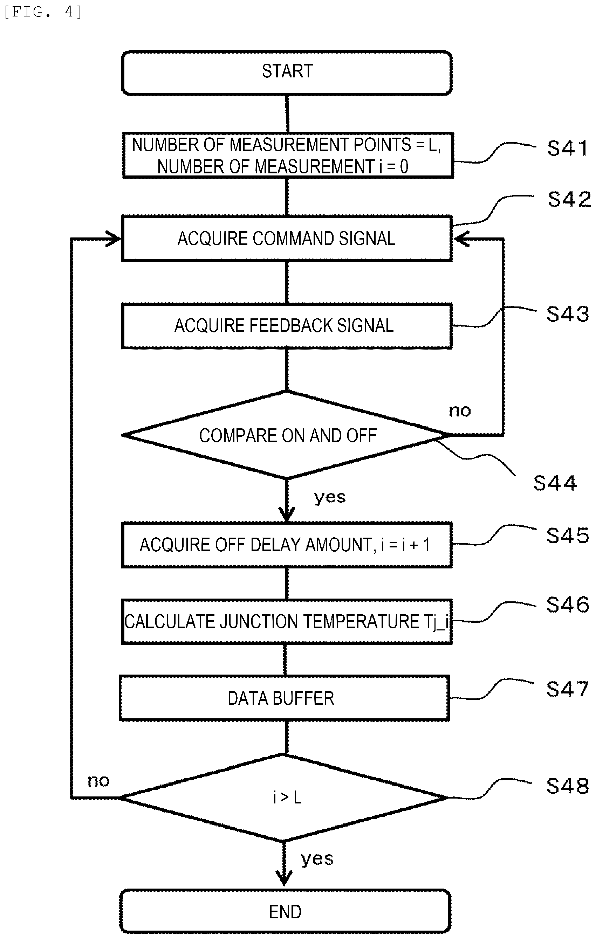

FIG. 4 is a flowchart of acquisition of the junction temperature in the embodiment. First, in step S41, the number of measurement points L to be acquired is input. The input of the number of measurement points can be input from the GUI 9. In addition, it is also possible to automatically input the number of measurement points by the logic unit 16. L is calculated from the measured time and carrier frequency of the power conversion device. For example, in a case where the carrier frequency is 1 kHz, the number of data points for one day is about 86 × 10⁶. When a data amount is large, L may be divided, and after acquisition of temperature amplitude frequency data to be described later, the acquired data may be erased and the data acquisition may be continuously repeated.

Next, in step S42, a PWM command signal is acquired by the command feedback transmission/reception unit 11. The PWM command signal is transmitted to the gate drive circuits 4a to 4f to drive the power semiconductor modules 3a to 3f. In step S43, a feedback signal is output from the gate drive circuits 4a to 4f, and is acquired by the command feedback transmission/reception unit 11. In step S44, the temperature detection unit 12 compares the command signal with the feedback signal to confirm switch-on and switch-off. If there is a switch failure, the process returns to step S42. If the switch operation is normal, the delay amount of switch-off with respect to the command signal is acquired according to step S45, and a measurement number counter is incremented. Next, in step S46, the junction temperature is calculated from the switch-off delay amount. The obtained junction temperature is temporarily accumulated in step S47. The above junction temperature acquisition is repeated up to a number of measurement points L in step S48.

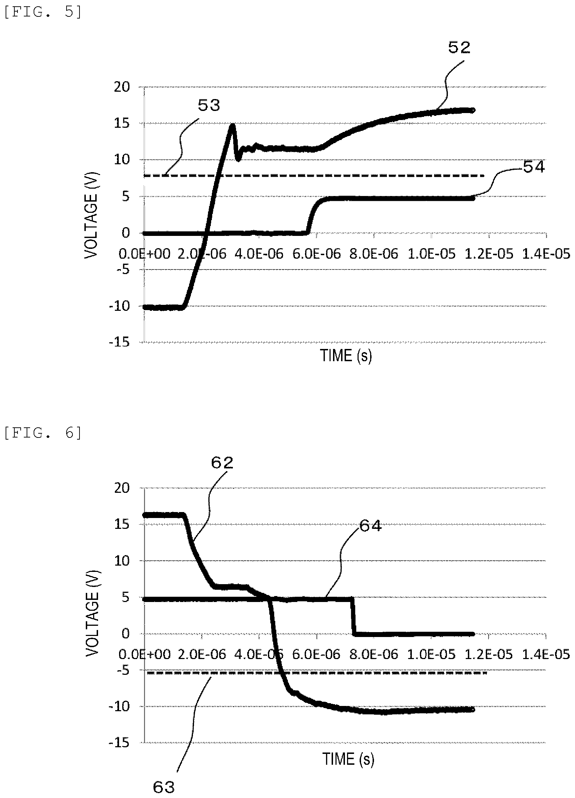

Next, the feedback signal output will be described with reference to FIGS. 5 and 6.

FIG. 5 is an example of a gate-emitter voltage 52 and a feedback signal 54 of a switch-on power semiconductor module. The feedback signal 54 is acquired by the command feedback transmission/reception unit 11. A preset switch-on reference voltage 53 (8 V in the embodiment) is compared with the gate-emitter voltage 52 by a comparator, a trigger signal when the gate-emitter voltage 52 exceeds the switch-on reference voltage 53 is generated, and the feedback signal 54 is output.

FIG. 6 is an example of a gate-emitter voltage 62 and a switch-off feedback signal 64 of a switch-off power semiconductor module. The switch-off feedback signal 64 is acquired by the command feedback transmitting/receiving unit 11. A preset switch-off reference voltage 63 (-5 V in the embodiment) is compared with the gate-emitter voltage 62 by a comparator, a trigger signal when the gate-emitter voltage 62 is lower than the switch-off reference voltage 63 is generated, and the switch-off feedback signal 64 is output.

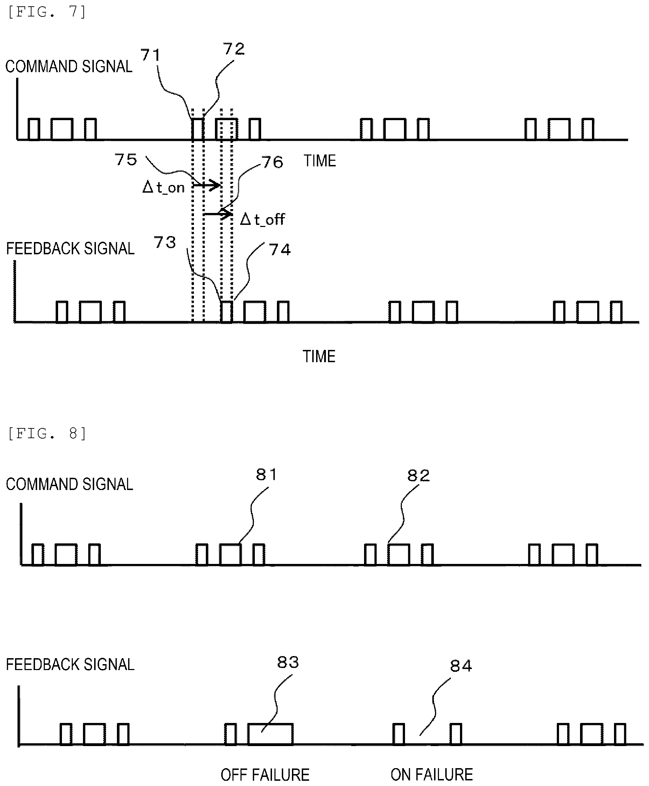

FIG. 7 is a diagram illustrating a PWM command signal and a feedback signal acquired by the command feedback transmission/reception unit 11. 71 is a switch-on command, 72 is a switch-off command, 73 is a switch-on feedback, and 74 is a switch-off feedback. As shown in FIG. 7, a switch-on feedback delay (Δt_on) 75 and a switch-off feedback delay (Δt_off) 76 are generated due to circuit delay. Therefore, when the time is moved according to the circuit delay amount, it can be confirmed that the command signal and the feedback signal correspond to each other.

FIG. 8 is a diagram illustrating that the power semiconductor module is not switched according to the command signal under the influence of noise or the like. In FIG. 8, for example, when a switch-off failure occurs at the time of executing a switch-off command 81, a feedback signal 83 may be generated. In addition, when a switch-on failure occurs at the time of executing a switch-on command 82, a feedback signal 84 (no signal) may be generated. Therefore, in the embodiment, in the case of a switch failure, information on the junction temperature is not obtained from the feedback signal, and thus the case is excluded.

As the junction temperature increases, the amount of delay (Δt_off) of the switch-off feedback signal increases. The inventors found that the amount of delay (Δt_on) of the switch-on also increases, but is smaller than (Δt_off) by one digit or more. Even when the temperature of the gate drive circuit increases, the feedback delay amount increases uniformly. In order to eliminate the temperature effect of the circuit part, the switch-off delay is measured based on the switch-on feedback signal of a corresponding pulse.

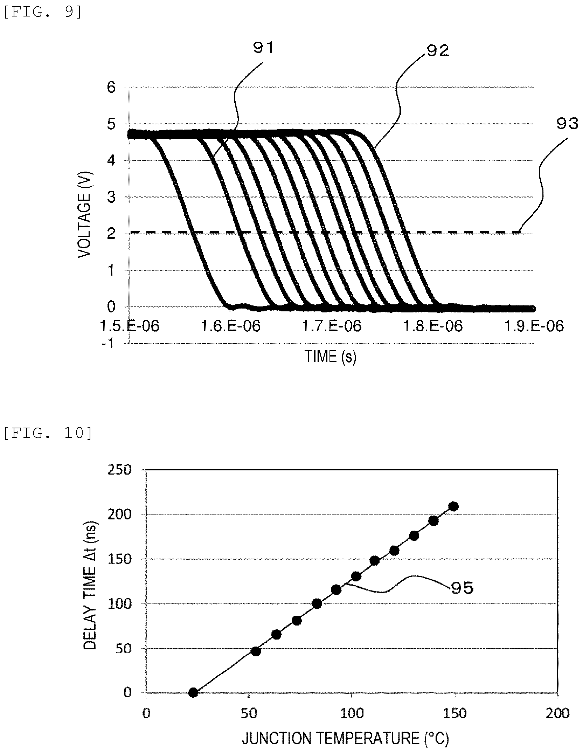

FIG. 9 shows the junction temperature dependency of the switch-off signal on a switch-on basis in a switched on/off pulse. For example, a feedback signal 91 has a junction temperature of 50°C, and a feedback signal 92 has a junction temperature of 150°C. The junction temperature sensitivity of the delay amount is measured, for example, by setting a threshold value 93.

FIG. 10 is an example of the junction temperature sensitivity of the delay amount. The delay amount is proportional to the junction temperature, and the sensitivity is 1.6 ns/°C. The junction temperature difference can be determined from the delay amount Δt. For example, the junction temperature can be acquired based on room temperature before the operation. The feedback signal is converted into a digital signal by the AD converter in the temperature detection unit because the feedback signal is an analog signal. In order to obtain the accuracy by 1°C, the sampling rate of the AD converter is desired to be equal to or more than 1 Gbps. Since the temperature acquisition unit is on a low voltage (weak) side, the temperature acquisition unit can be configured by a standard circuit. The junction temperature converted into the digital signal is accumulated in step S47 of FIG. 4 and transferred to the parameter calculation unit 15, and the element damage degree and remaining lifetime of each of the power semiconductor modules 3a to 3f are estimated.

As described above, according to the embodiment, it is possible to provide a system for acquiring the junction temperature and the remaining lifetime of the individual power semiconductor elements in the power converter, giving a feedback of the measurement result to the electric motor control to perform a lifetime extension treatment of the power module, and warning replacement of the parts.

### Third Embodiment

In the embodiment, the damage degree and the remaining lifetime estimation method of the power semiconductor module will be described.

The parameter calculation unit 15 shown in FIG. 1 uses the time series data of the PWM command signal and the junction temperature to estimate the damage degree and the remaining lifetime of the power semiconductor module by calculation.

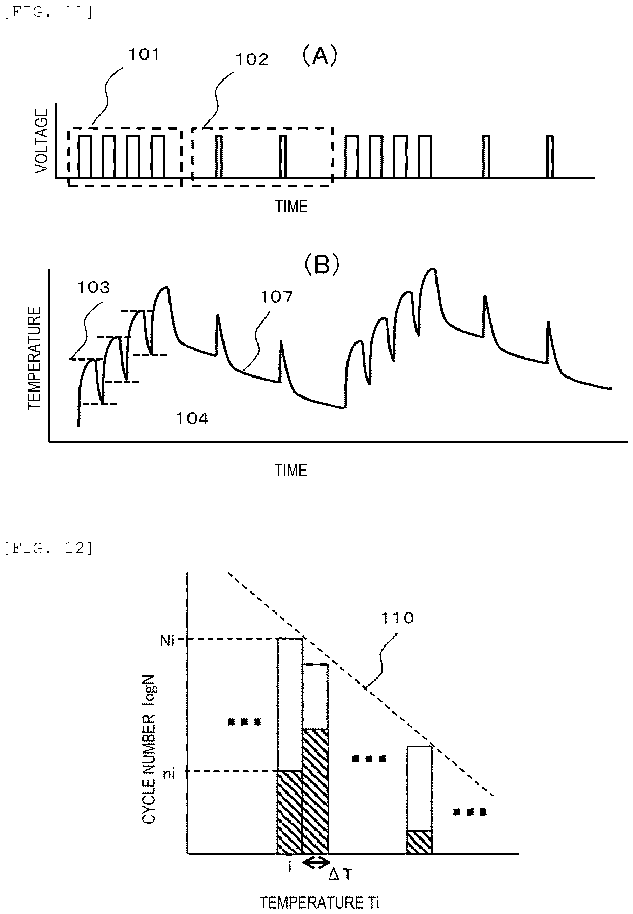

FIG. 11 is a diagram showing time series data in the embodiment, FIG. 11A shows a PWM command signal, and FIG. 11B shows the junction temperature of the chip.

In FIG. 11A, a PWM command signal 101 has a large duty ratio, and a PWM command signal 102 has a small duty ratio. In response to the PWM command signal, for the junction temperature, as shown in FIG. 11B, the time series data of a junction temperature 107 has a maximum value 103 and a minimum value 104, and changes in a vibrated manner. For the PWM command signal 101 having a big duty ratio, the junction temperature tends to increase, and for the PWM command signal 102 having a small duty ratio, the junction temperature tends to decrease.

Since one of the viewpoints of the embodiment is to detect a damage imbalance of the plurality of power semiconductor modules in the power conversion device and to prevent system failure in advance, a frequency distribution of a thermal cycle of the junction temperature is acquired in the thermal cycle of the junction temperature shown in FIG. 11B. A method for frequency conversion of thermal cycles is, for example, a rain flow algorithm.

FIG. 12 shows an example of the temperature amplitude frequency obtained by converting the time series data of junction temperature into a histogram. The temperature amplitude ΔT of a horizontal axis is set at a scale of 5°C, for example. The vertical axis represents the number of cycles. A thermal cycle rating 110 uses power cycle test results provided at the time of shipment of the power semiconductor module. Ni is the maximum number of cycles of a temperature Ti, and ni is the number of cycles obtained by the parameter calculation unit 15 of the temperature Ti. A damage degree Di of each temperature Ti is given according to Di = ni/Ni. Therefore, a total damage degree is given by D = ∑Di. In the method, although the degree of damage is larger than that in a related method, the accuracy of the unbalance detection of the power semiconductor module is improved. Based on the above calculation result, the damage module can be illustrated on the power conversion device display unit 17.

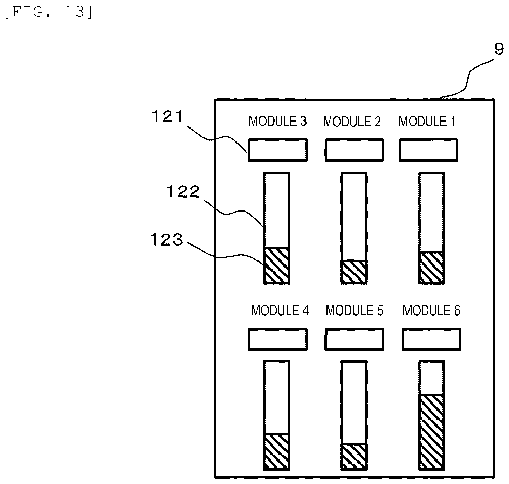

FIG. 13 shows a specific example of the GUI 9. As shown in FIG. 13, the average junction temperature and the maximum junction temperature of the individual power semiconductor modules can be displayed on a temperature display unit 121, and a damage degree 123 can be displayed on a lifetime display unit 122. In addition, it is also possible to acquire weather data, operation data, and the like from the environment information acquisition unit 18, generate a relaxation command by the logic unit 16 based on the command signal, the junction temperature, and the damage degree, and output the relaxation control PWM command signal by the control unit 13. In addition, the GUI 9 may also be included in the vehicle information integration system. In addition, when the GUI 9 is included in the central monitoring system, it is possible to monitor a plurality of vehicles, and it is possible to optimize the maintenance plan.

According to the embodiment described in detail above, a power conversion device may be provided, in which abnormality or damage of the power semiconductor and the power conversion device associated with the power semiconductor is detected with high accuracy, unfitness such as a failure can be prevented with high accuracy, and enabling a long-term use.

While the embodiments have been described, the invention is not limited to the embodiments described above, and includes various modifications. For example, a part of the configuration of one embodiment may be replaced with the configuration of another embodiment, and the configuration of another embodiment may be added to the configuration of one embodiment. In addition, another configuration may be added to a part of the configuration of each embodiment, and a part of the configuration of each embodiment may be eliminated or replaced with another configuration. The scope of protection is defined in the appended claims.

### Reference Sign List

1: power conversion device
2: electric motor
3a, 3b, 3c, 3d, 3e, 3f: power semiconductor modules
4a, 4b, 4c, 4d, 4e, 4f: gate drive circuit
7: control device
9: GUI
11: command feedback transmission/reception unit
12: temperature detection unit
13: control unit
14: current detection unit
15: parameter calculation unit
16: logic unit
17: power conversion device display unit
18: environment information acquisition unit
20: railway vehicle
21: vehicle information integration system
22: central monitoring device
25: antenna
30: bond wire
31: semiconductor chip
32, 35: solder
33: metal wiring
34: insulating substrate
36: metal base
37: thermal grease
38: cooler
52: gate-emitter voltage for switch-on
53: switch-on reference voltage
54: switch-on feedback signal
62: gate-emitter voltage for switch-on
63: switch-off reference voltage
64: switch-off feedback signal
71: switch-on command
72: switch-off command
73: switch-on feedback
74: switch-off feedback
75: switch-on feedback delay
76: switch-off feedback delay
101, 102: PWM command signal
103: junction temperature maximum value
104: junction temperature minimum value
107: time series data of junction temperature
110: thermal cycle rating
121: temperature display unit
122: lifetime display unit
123: damage degree

## Claims

1. A power conversion device (1) comprising:
a power semiconductor module (3a-f) that has a switching element;
a gate drive circuit (4a-f) configured to drive the switching element and transmit a feedback signal during a switching operation of the switching element;
a control unit (7) configured to output a PWM command signal (101, 102) for switching to the gate drive circuit (4a-f);
a temperature detection unit (12) configured to calculate a junction temperature of the switching element based on the PWM command signal (101, 102) and the feedback signal; and
an arithmetic processing unit configured to analyze a state of the power semiconductor module (3a-f) according to the junction temperature calculated by the temperature detection unit (12) and the PWM command signal (101, 102),
**characterized in that** the arithmetic processing unit is configured for converting time series data of the junction temperature to a temperature amplitude frequency, and determining an abnormality of the power conversion device (1) based on the temperature amplitude frequency using a predetermined number of cycles as a reference value.

2. The power conversion device (1) according to claim 1, wherein the gate drive circuit (4a-f) is configured to generate the feedback signal (64) by comparing a voltage (62) between a gate and an emitter with a switch-off reference voltage (63) during a switching operation of the switching element.

3. The power conversion device (1) according to claim 1, wherein the temperature detection unit (12) is configured to calculate a switch-off delay amount (76) of the switching element based on the PWM command signal (101, 102) and the feedback signal, and calculate the junction temperature.

4. The power conversion device (1) according to claim 1, further comprising:
a display unit (17) configured to individually display a state of the power semiconductor module (3a-f) which is analyzed by the arithmetic processing unit for each of the plurality of power semiconductor modules (3a-f).

5. An electric motor control system comprising:
the power conversion device (1) according to claim 1; and
an electric motor (M) controlled by the power conversion device (1),
wherein the power conversion device (1) includes a display unit (17) configured to individually display a state of the power semiconductor module (3a-f) which is analyzed by the arithmetic processing unit for each of the plurality of power semiconductor modules (3a-f).

6. A diagnosis system of a power conversion device (1), the diagnosis system comprising:
the electric motor control system according to claim 5, and
a central monitoring device (22) connected to the electric motor control system via a network (23),
wherein the central monitoring device (22) is configured to acquire the state of the power semiconductor module (3a-f) analyzed by the arithmetic processing unit via the network (23).

7. A diagnosis method of a power conversion device (1) including a power semiconductor module (3a-f) that has a switching element, the diagnosis method comprising:
calculating a junction temperature of the switching element based on a PWM command signal (101, 102) for driving the switching element, and a feedback signal during a switching operation of the switching element;
determining an abnormality of the power semiconductor module (3a-f) in accordance with the calculated junction temperature and the PWM command signal (101, 102); and
**characterized by**:
converting time series data of the junction temperature to a temperature amplitude frequency, and determining an abnormality of the power conversion device (1) based on the temperature amplitude frequency using a predetermined number of cycles as a reference value.

8. The diagnosis method of the power conversion device (1) according to claim 7, further comprising:
generating the feedback signal (64) by comparing a voltage (62) between the gate and the emitter with a switch-off reference voltage (63) during a switching operation of the switching element; and
calculating a switch-off delay amount (76) of the switching element based on the PWM command signal (101, 102) and the feedback signal, and calculating the junction temperature based on the switch-off delay amount (76).

## Patentansprüche

1. Leistungsumwandlungsvorrichtung (1) umfassend:
ein Leistungshalbleitermodul (3a-f), das ein Schaltelement aufweist;
eine Gate-Treiberschaltung (4a-f), die dazu konfiguriert ist, das Schaltelement anzusteuern und ein Rückkopplungssignal während eines Schaltvorgangs des Schaltelements zu übertragen;
eine Steuereinheit (7), die dazu konfiguriert ist, ein PWM-Befehlssignal (101, 102) zum Umschalten auf die Gate-Treiberschaltung (4a-f) auszugeben;
eine Temperaturerfassungseinheit (12), die dazu konfiguriert ist, eine Sperrschichttemperatur des Schaltelements auf der Grundlage des PWM-Befehlssignals (101, 102) und des Rückkopplungssignals zu berechnen; und
eine arithmetische Verarbeitungseinheit, die dazu konfiguriert ist, einen Zustand des Leistungshalbleitermoduls (3a-f) gemäß der von der Temperaturerfassungseinheit (12) berechneten Sperrschichttemperatur und dem PWM-Befehlssignal (101, 102) zu analysieren,
**dadurch gekennzeichnet, dass** die arithmetische Verarbeitungseinheit dazu konfiguriert ist, Zeitreihendaten der Sperrschichttemperatur in eine Temperaturamplitudenfrequenz umzuwandeln und eine Abnormalität der Leistungsumwandlungsvorrichtung (1) auf der Grundlage der Temperaturamplitudenfrequenz unter Verwendung einer vorgegebenen Anzahl von Zyklen als Referenzwert zu bestimmen.

2. Leistungsumwandlungsvorrichtung (1) nach Anspruch 1, wobei die Gate-Treiberschaltung (4a-f) dazu konfiguriert ist, das Rückkopplungssignal (64) durch Vergleichen einer Spannung (62) zwischen einem Gate und einem Emitter mit einer Abschaltreferenzspannung (63) während eines Schaltvorgangs des Schaltelements zu erzeugen.

3. Leistungsumwandlungsvorrichtung (1) nach Anspruch 1, wobei die Temperaturerfassungseinheit (12) dazu konfiguriert ist, auf der Grundlage des PWM-Befehlssignals (101, 102) und des Rückkopplungssignals einen Abschaltverzögerungsbetrag (76) des Schaltelements zu berechnen und die Sperrschichttemperatur zu berechnen.

4. Leistungsumwandlungsvorrichtung (1) nach Anspruch 1, die ferner umfasst:
eine Anzeigeeinheit (17), die dazu konfiguriert ist, einen Zustand des Leistungshalbleitermoduls (3a-f), der von der arithmetischen Verarbeitungseinheit analysiert wird, für jedes von mehreren Leistungshalbleitermodulen (3a-f) individuell anzuzeigen.

5. System zur Steuerung eines Elektromotors, das Folgendes umfasst:
die Leistungsumwandlungsvorrichtung (1) nach Anspruch 1; und
einen Elektromotor (M), der von der Leistungsumwandlungsvorrichtung (1) gesteuert wird,
wobei die Leistungsumwandlungsvorrichtung (1) eine Anzeigeeinheit (17) enthält, die dazu konfiguriert ist, einen Zustand des Leistungshalbleitermoduls (3a-f), der von der arithmetischen Verarbeitungseinheit analysiert wird, für jedes von mehreren Leistungshalbleitermodulen (3a-f) individuell anzuzeigen.

6. Diagnosesystem für eine Leistungsumwandlungsvorrichtung (1), wobei das Diagnosesystem umfasst:
das Elektromotorsteuerungssystem nach Anspruch 5, und
eine zentrale Überwachungseinrichtung (22), die über ein Netzwerk (23) mit dem Elektromotorsteuerungssystem verbunden ist,
wobei die zentrale Überwachungseinrichtung (22) dazu konfiguriert ist, den von der arithmetischen Verarbeitungseinheit analysierten Zustand des Leistungshalbleitermoduls (3a-f) über das Netzwerk (23) zu erfassen.

7. Diagnoseverfahren für eine Leistungsumwandlungsvorrichtung (1), die ein Leistungshalbleitermodul (3a-f) mit einem Schaltelement enthält, wobei das Diagnoseverfahren umfasst:
Berechnen einer Sperrschichttemperatur des Schaltelements auf der Grundlage eines PWM-Befehlssignals (101, 102) zum Ansteuern des Schaltelements und eines Rückkopplungssignals während eines Schaltvorgangs des Schaltelements;
Bestimmen einer Abnormalität des Leistungshalbleitermoduls (3a-f) gemäß der berechneten Sperrschichttemperatur und dem PWM-Befehlssignal (101, 102); und
**gekennzeichnet durch**:
Umwandeln von Zeitreihendaten der Sperrschichttemperatur in eine Temperaturamplitudenfrequenz und Bestimmen einer Abnormalität der Leistungsumwandlungsvorrichtung (1) auf der Grundlage der Temperaturamplitudenfrequenz unter Verwendung einer vorgegebenen Anzahl von Zyklen als Referenzwert.

8. Diagnoseverfahren für die Leistungsumwandlungsvorrichtung (1) nach Anspruch 7, das ferner umfasst:
Erzeugen des Rückkopplungssignals (64) durch Vergleichen einer Spannung (62) zwischen dem Gate und dem Emitter mit einer Abschaltreferenzspannung (63) während eines Schaltvorgangs des Schaltelements; und
Berechnen eines Abschaltverzögerungsbetrags (76) des Schaltelements auf der Grundlage des PWM-Befehlssignals (101, 102) und des Rückkopplungssignals, und Berechnen der Sperrschichttemperatur auf der Grundlage des Abschaltverzögerungsbetrags (76).

## Revendications

1. Dispositif (1) de conversion de puissance comprenant :
un module (3a-f) de semi-conducteur de puissance qui a un élément de commutation ;
un circuit (4a-f) d'excitation de grille configuré pour exciter l'élément de commutation et transmettre un signal de rétroaction lors d'une opération de commutation de l'élément de commutation ;
une unité (7) de commande configurée pour délivrer en sortie un signal de commande PWM (101, 102) pour commuter sur le circuit (4a-f) d'excitation de grille ;
une unité (12) de détection de température configurée pour calculer une température de jonction de l'élément de commutation sur la base du signal de commande PWM (101, 102) et du signal de rétroaction ; et
une unité de traitement arithmétique configurée pour analyser un état du module (3a-f) de semi-conducteur de puissance en fonction de la température de jonction calculée par l'unité (12) de détection de température et du signal de commande PWM (101, 102),
**caractérisé en ce que** l'unité de traitement arithmétique est configurée pour convertir des données chronologiques de la température de jonction en une fréquence d'amplitude de température, et déterminer une anomalie du dispositif (1) de conversion de puissance sur la base de la fréquence d'amplitude de température en utilisant un nombre prédéterminé de cycles comme une valeur de référence.

2. Dispositif (1) de conversion de puissance selon la revendication 1, dans lequel le circuit (4a-f) d'excitation de grille est configuré pour générer le signal de rétroaction (64) en comparant une tension (62) entre une grille et un émetteur avec une tension (63) de coupure de référence lors d'une opération de commutation de l'élément de commutation.

3. Dispositif (1) de conversion de puissance selon la revendication 1, dans lequel l'unité (12) de détection de température est configurée pour calculer une quantité (76) de retard de coupure de l'élément de commutation sur la base du signal de commande PWM (101, 102) et du signal de rétroaction, et calculer la température de jonction.

4. Dispositif (1) de conversion de puissance selon la revendication 1, comprenant en outre :
une unité (17) d'affichage configurée pour afficher individuellement un état du module (3a-f) de semi-conducteur de puissance qui est analysé par l'unité de traitement arithmétique pour chacun de la pluralité de modules (3a-f) de semi-conducteur de puissance.

5. Système de commande de moteur électrique comprenant :
le dispositif (1) de conversion de puissance selon la revendication 1 ; et
un moteur électrique (M) commandé par le dispositif (1) de conversion de puissance,
dans lequel le dispositif (1) de conversion de puissance inclut une unité (17) d'affichage configurée pour afficher individuellement un état du module (3a-f) de semi-conducteur de puissance qui est analysé par l'unité de traitement arithmétique pour chacun de la pluralité de modules (3a-f) de semi-conducteur de puissance.

6. Système de diagnostic d'un dispositif (1) de conversion de puissance, le système de diagnostic comprenant :
le système de commande de moteur électrique selon la revendication 5, et
un dispositif central (22) de surveillance connecté au système de commande de moteur électrique par l'intermédiaire d'un réseau (23),
dans lequel le dispositif central (22) de surveillance est configuré pour acquérir l'état du module (3a-f) de semi-conducteur de puissance analysé par l'unité de traitement arithmétique par l'intermédiaire du réseau (23).

7. Procédé de diagnostic d'un dispositif (1) de conversion de puissance incluant un module (3a-f) de semi-conducteur de puissance qui a un élément de commutation, le procédé de diagnostic comprenant :
le calcul d'une température de jonction de l'élément de commutation sur la base d'un signal de commande PWM (101, 102) pour piloter l'élément de commutation et d'un signal de rétroaction lors d'une opération de commutation de l'élément de commutation ;
la détermination d'une anomalie du module (3a-f) de semi-conducteur de puissance en fonction de la température de jonction calculée et du signal de commande PWM (101, 102) ; et
**caractérisé par** :
la conversion de données chronologiques de la température de jonction en une fréquence d'amplitude de température, et la détermination d'une anomalie du dispositif (1) de conversion de puissance sur la base de la fréquence d'amplitude de température en utilisant un nombre prédéterminé de cycles comme une valeur de référence.

8. Procédé de diagnostic du dispositif (1) de conversion de puissance selon I revendication 7, comprenant en outre :
la génération du signal de rétroaction (64) en comparant une tension (62) entre la grille et l'émetteur avec une tension (63) de coupure de référence lors d'une opération de commutation de l'élément de commutation ; et
le calcul d'une quantité (76) de retard de coupure de l'élément de commutation sur la base du signal de commande PWM (101, 102) et du signal de rétroaction, et le calcul de la température de jonction sur la base de la quantité (76) de retard de coupure.
